(19) Europäisches Patentamt

European Patent Office

Office européen des brevets

(11) Veröffentlichungsnummer : **0 363 650 B1**

(12) # EUROPÄISCHE PATENTSCHRIFT

(45) Veröffentlichungstag der Patentschrift :
**17.06.92 Patentblatt 92/25**

(21) Anmeldenummer : **89116603.5**

(22) Anmeldetag : **08.09.89**

(51) Int. Cl.⁵ : **B29C 51/26, B29C 51/18**

(54) **Inline-Thermoformmaschine.**

(30) Priorität : **10.09.88 DE 3830889**

(43) Veröffentlichungstag der Anmeldung :
**18.04.90 Patentblatt 90/16**

(45) Bekanntmachung des Hinweises auf die
Patenterteilung :
**17.06.92 Patentblatt 92/25**

(84) Benannte Vertragsstaaten :
**CH DE ES FR GB IT LI NL**

(56) Entgegenhaltungen :
**FR-A- 2 198 820**
**US-A- 2 712 717**
**US-A- 2 967 328**
**US-A- 3 397 508**
**US-A- 3 476 840**

(56) Entgegenhaltungen :
**US-A- 3 744 617**
**US-A- 3 749 544**
**US-A- 4 368 024**
**JAPANESE PATENTS GAZETTE, Woche X32,
15. September 1976, Absatz A, "Polymers",
Seite 8, Nr. 60678x/32; & JP-A-51 73 070(Mitsubishi Mons Ch) 24-06-1976**

(73) Patentinhaber : **BELLAPLAST GmbH
Karl-Bosch-Strasse 10
W-6200 Wiesbaden 1 (DE)**

(72) Erfinder : **Hartnagel, Hatto, Dipl.-Ing. (FH)
Barbarossa Str. 12
W-6200 Wiesbaden (DE)**

(74) Vertreter : **Dr. Fuchs, Dr. Luderschmidt
Dipl.-Phys. Seids, Dr. Mehler Patentanwälte
Abraham-Lincoln-Strasse 7
W-6200 Wiesbaden (DE)**

EP 0 363 650 B1

## Beschreibung

Die Erfindung betrifft eine Inline-Thermoformmaschine ohne Folienheizung, mit Extruder, mit Kühlstrecke, mit Folienspeicher mit mindestens zwei Umlenkwalzen und einer Tänzerwalze und mit einer Formstation und einer Stanzstation sowie einer Einrichtung zum Transport der Folie durch die Form- und die Stanzstation, die zwei am Folienrand angeordnete Transportketten umfaßt.

Die Erfindung betrifft auch ein Verfahren zum Herstellen von dünnwandigen Formkörpern aus thermoplastischem Material, in welchem das thermoplastische Material in einem Extruder bis zur Fließfähigkeit verdichtet und erhitzt und in Form eines plastischen Bandes (Folie) aus einer schlitzförmigen Düse gegossen wird, diese Folie einer Thermoverformung zur Bildung der gewünschten Formkörper unterworfen wird, und die so in der Folie gebildeten Formkörper ausgestanzt und abtransportiert werden.

Zur Herstellung von Einweggeschirr, wie Becher, Schalen, Teller oder dergleichen aus thermoplastischem Material sind sogenannte Inline-Thermoformmaschinen ohne zusätzliche Folienheizung bekannt (DE-OS 22 52 219), bei denen ein dünnes Band aus thermoplastischem Material kontinuierlich aus einer Breitschlitzdüse mit vorgeschaltetem Extruder gegossen wird. Das aus der Breitschlitzdüse austretende Band oder Folie wird einer Kühleinrichtung zugeführt, die aus einer Anzahl von Umlenkwalzen besteht. Dort wird das thermoplastische Material an beiden Oberflächen derart gekühlt, daß es an der Oberfläche noch verformbar aber tragfähig ist, während das Material in den zwischen diesen Oberflächen liegenden inneren Bereichen im wesentlichen auf der Extrudertemperatur und dem plastischen Zustand belassen wird.

Um die von der Extrudiereinrichtung kontinuierlich gefertigte Folie einer schrittweise arbeitenden Thermoformmaschine zuführen zu können, wird die Folie nach diesem Abkühlen oder Stabilisieren einem sogenannten Folienspeicher zugeführt, um den kontinuierlichen Folienvorschub in einen schrittweisen Vorschub umzusetzen. Ein derartiger Folienspeicher besteht aus wenigstens zwei feststehenden Umlenkwalzen und einer dazwischen angeordneten Tänzerwalze.

In der Thermoformmaschine wird die thermoplastische Folie einer Thermoverformung unterworfen, wobei entweder ein mechanisch wirkendes Streckhelfer-Element auf die eine vorgekühlte Oberfläche der Folie angesetzt und die Folie mit ihrer zweiten vorgekühlten Oberfläche gegen die Formwerkzeugfläche geführt und dort gekühlt wird oder die Folie mindestens zeitweilig an der einen vorgekühlten Oberfläche mit Preßluft beaufschlagt und dabei mit der zweiten vorgekühlten Oberfläche gegen die Formwerkzeugfläche gepreßt und dort gekühlt wird.

Nach dem Formen schließt sich eine Stanzstation an, in der die Formkörper aus der Folie herausgestanzt werden. Der verbleibende Folienrest wird einer Auffangstation zugeführt, in der Einrichtungen zum Zerkleinern dieser Folienreste in körnige Form vorhanden sind, so daß das Restmaterial über eine Dosiervorrichtung, in der das Restmaterial in vorher bestimmter Relation dem Frischmaterial beigemischt wird, erneut der Extrudiervorrichtung zugeführt wird.

Zum Transport durch die Formstation und die Stanzstation liegt die Folie mit ihren beiden Randbereichen auf sogenannten Transportketten auf, die gewöhnlich mit Spitzen versehen sind. Mittels einer Deckschiene wird die Folie in die Aufnehmer oder Spitzen dieser Ketten gedrückt.

Diese bekannten Inline-Thermoformmaschinen haben jedoch eine Reihe von Nachteilen.

Dadurch, daß die Folie nach Verlassen der Kühlstation immer noch plastisch ist, damit die anschließende Verformung ohne zusätzliche Beheizung durchgeführt werden kann, hängt die Folie in der Formstation zwischen den Transportketten durch. Dieses Durchhängen bestimmt je nach Art des Materials die Breite der gesamten Thermoformmaschine. Bei einer Thermoformmaschine, die mit einer vorgegebenen Taktzahl arbeitet, läßt sich der Durchsatz somit durch eine Verbreiterung der Folie und der gesamten Maschine nicht mehr erhöhen.

Zum anderen besteht die Gefahr, daß die Folie, wenn die Temperatur nicht exakt eingestellt ist oder außer Kontrolle geraten ist, mit dem unteren Formwerkzeug während des Transports durch die Formstation in Berührung kommt. Ein Durchsacken der Fläche kann dann den gesamten Produktionsprozeß unterbrechen.

Nachteilig bei solchen Maschinen ist weiterhin eine unterschiedliche Folientemperatur im Formfeld, die durch den beschriebenen Folienspeicher bedingt ist und zu unkontrollierten Dick- bzw. Dünnstellen bei den fertigen Formkörpern führt. Während das Formwerkzeug geschlossen ist, und die Tänzerwalze ihren Weg um den vorgegebenen Hub ausführt, steht die Folie auf der der Thermoformstation benachbarten Umlenkwalze des Folienspeichers, so daß im Auflagebereich der Folie eine Abkühlung der Folie erfolgt. Auch im Auflagebereich auf der Tänzerwalze erfolgt eine geringe Abkühlung, da diese Walze mit einer anderen Umfangsgeschwindigkeit läuft als die dem Extruder zugewandte Umlenkwalze des Folienspeichers. Um diesen Temperaturfehler klein zu halten, sind solche Walzen meist aus wenig wärmeleitenden Materialien hergestellt.

Bei Materialien, bei denen Qualitätseinbußen bei Temperaturdifferenzen von mehr als 5°C auftreten, wurden durch diese Maßnahmen bereits Verbesserungen erzielt. Für Materialien allerdings, bei denen bei Temperaturunterschieden von bereits 1 bis 2°C eine Qualitätsminderung auftritt, reichen Walzen mit wenig wärmeleitenden Materialien allerdings nicht aus.

Ein weiteres Problem tritt schließlich durch die sogenannten Schwindungsfehler auf. Hinter der Thermoformstation kühlt das Folienmaterial weiter ab, wodurch eine Materialschrumpfung auftritt, die dazu führt, daß die Formkörper, wenn sie die Stanzstation erreichen, sich nicht exakt an der Stelle befinden, an der das Stanzwerkzeug vorgesehen ist. Je nach Material beträgt dieser Schwindungsfehler 0,1 bis 0,25%, was bei den üblichen Folienbreiten etwa 0,7 bis 1,75 mm ausmachen kann. Dies bedeutet, daß die Formkörper nicht sauber ausgestanzt werden können.

Aus der US-PS 4,368,024 ist ebenfalls eine Thermoformmaschine bekannt, die vor der Formstation eine Wärmezone aufweist. In diesem Abschnitt wird die Folie aufgeheizt, so daß ein Durchhängen der Folie auftritt. Um dieses Durchhängen zu vermeiden, ist eine Vorrichtung vorgesehen, bei der es sich entweder um beabstandet angeordnete Förderriemen oder um eine größere Anzahl von mit Scheiben versehenen Wellen handelt. Die Folie wird gemäß der US-PS 4,368,024 nicht von der Transporteinrichtung, sondern durch eine zusätzliche Vorrichtung abgestützt. Auch wird die Folie nicht während des Thermoverformens in mindestens drei beabstandeten Bereichen geführt, sondern dies erfolgt im Bereich vor der Thermostation.

In der US-PS 3,744,617 wird eine Thermoformmaschine beschrieben, die außer Transportketten noch zusätzliche Bänder aufweist, um ein Durchhängen der Folie im Ofen zu vermeiden.

Aufgabe der Erfindung ist daher eine Inline-Thermoformmaschine und ein Verfahren, mit denen die Wirtschaftlichkeit, die Betriebssicherheit und die Qualität der Formteile deutlich verbessert werden können.

Diese Aufgabe wird mit einer Inline-Thermoformmaschine gelöst, bei der die Umlenkwalzen und die Tänzerwalze mit mindestens drei im Abstand angeordneten runden Scheiben versehen sind, auf deren Außenumfang die Folie aufliegt und im Bereich der Formstation zwischen diesen beiden äußeren Transportketten mindestens eine weitere Transportkette angeordnet ist.

Durch die Einfügung weiterer Transportketten kann die Folienbreite bekannter Thermoformmaschinen vervielfacht werden. Gleichzeitig führt die zusätzliche Unterstützung der Folie im Formwerkzeug zu einer erhöhten Betriebssicherheit bei hohen Folientemperaturen. Die Folie kann nicht mehr soweit durchsacken wie bisher und den Folienprozeß dadurch unterbrechen. Zusätzlich bewirkt die partielle Abkühlung der Folie auf den mittleren Transportketten durch die damit verbundene kältebedingte Stabilisierung der Folie einen besseren Transport. Die Folie ist in diesen Bereichen kühler als in den Bereichen, in denen die Formgebung stattfinden soll. Hinter der Formstation ist dieser Bereich aber noch wärmer als die Bereiche, in denen die Becherformung stattgefunden hat.

Die mittleren Transportketten besitzen keine obere Deckschiene zum Einpressen der Folie in irgendwelche formschlüssigen Mitnehmer, wie es bei den beiden Transportketten im Außenbereich der Folie der Fall ist. Die Folie liegt lediglich lose auf diesen mittleren Ketten auf.

Gemäß einer besonderen Ausführungsform bestehen diese zusätzlichen Transportketten aus Spitzenketten. Je nach Art des Materials wird der Abstand dieser zusätzlichen Transportketten so gewählt, daß die Folien nicht mit dem unteren Formwerkzeug während des Transportes durch die Formstation in Berührung kommen.

Eine weitere Verbesserung hinsichtlich der Produktqualität wird dadurch erreicht, daß die Umlenkwalzen und die Tänzerwalze des Folienspeichers mit mindestens drei im Abstand angeordneten runden Scheiben versehen sind, auf deren Außenumfang die Folie aufliegt.

Während bei den bisher verwendeten kompakten Walzen die Folie mit ihrer gesamten Breite auflag, liegt die Folie nunmehr lediglich auf diesen Scheiben auf, die mit ihrer profilierten Kontur die Folie durch Reibschluß und Formschluß tragen. Durchmesser und Abstand der Scheiben ist je nach Art des verwendeten Folienmaterials derart bemessen, daß die zwischen den Scheiben durchhängende Folie die die Scheiben tragenden Walzen nicht berührt. Die die Folie tragenden Scheiben können aus beliebigen Werkstoffen, z.B. aus Metallen oder Kunststoffen, hergestellt sein.

Die durch die Scheiben bewirkte streifenweise Abkühlung der Folie ist ohne Bedeutung, wenn gemäß einer weiteren Ausführungsform die Scheiben in Transportrichtung den nachfolgenden Transportketten gegenüberliegen. Dies bedeutet, daß die Bereiche der Folie, mit denen die Folie auf den Scheiben aufgelegen hat, von den nachfolgenden Transportketten erfaßt werden. Die Auflagenbereiche der Folie auf den Scheiben und auf den Transportketten sind somit identisch und die vorhergehende Abkühlung der Folien auf den Scheiben ist für den weiteren Verformungsvorgang unschädlich.

Durch das Vorsehen dieser neuartigen Walzen im Folienspeicher können die bisher im Folienspeicher im Bereich der zu verformenden Folie aufgetretenen Temperaturdifferenzen bis auf nahezu 0° reduziert werden, was insbesondere für die Verarbeitung von temperaturempfindlichen Materialien, wie z.B. Polypropylen, von entscheidender Bedeutung ist.

Zusätzlich weist die erfindungsgemäße Thermoformmaschine zwischen der Formstation und der Stanzstation eine Prägestation auf.

Gemäß einer besonderen Ausführungsform besitzt diese Prägestation genau so viele Prägewerkzeuge, wie zusätzliche Transportketten in der Formstation vorgesehen sind. Die Prägewerkzeuge sind zweiteilig ausgeführt und besitzen mindestens die Länge des Formwerkzeugs, so daß im gleichen Takt gearbeitet werden kann wie die Formstation.

Diese Prägestation erfüllt zwei Aufgaben. Zum einen sind diejenigen Folienbereiche in der Mitte der Folienbahn, die nicht verformt werden, und nachher dem Frischmaterial wieder zugeführt werden, noch zu heiß, um durch die angeschlossene Mühle zerkleinert werden zu können. Zum anderen wird in der Prägestation ein Dehnungsstreifen eingeformt, der vor dem Ausstanzen der Formkörper gesteckt wird, um Schwindungsfehler zu kompensieren, die aufgrund der Abkühlung nach dem Formvorgang auftreten.

Durch das Prägen wird einerseits eine Abkühlung dieser Folienbereiche erzielt, so daß dieses Material nachher von der Zerkleinerungsvorrichtung verarbeitet werden kann. Andererseits wird mit dem Prägen in die Restmaterial-Bereiche der Materialbahn eine Verformung eingebracht, die eine Dehnbarkeit in der Material-Fläche zuläßt. Damit kann der Schwindungsfehler, der sich nachher nachteilig beim Stanzen auswirkt, kompensiert werden. Zu diesem Zweck ist die Gestalt des Prägewerkzeugs auf die Art des Materials und den damit verbundenen Schwindungsfehler eingestellt. Bei der Verwendung von Polystyrol kann der Schwindungsfehler beispielsweise 0,1% betragen, was bei einer Folienbreite von 700 mm immerhin zu einer Verschiebung des Formkörpers von 0,35 mm führt. Bei weitaus temperaturempfindlicheren Materialien, wie z.B. Polypropylen, beträgt der Schwindungsfehler 0,25%, was bei einer Breite von 700 mm immerhin eine Verschiebung der Formkörper von 0,88 mm bewirkt, so daß beim Einsatz dieses Materials keine brauchbaren Formkörper hergestellt werden können. Wenn nun bei einer Folienbreite von 700 mm eine zusätzliche mittlere Kette und ein dahinter angeordnetes Prägewerkzeug vorgesehen wird, wird der Schwindungsfehler auf die Hälfte, d.h. auf 0,175 bzw. 0,44 mm reduziert. Dies bedeutet, daß durch die Anzahl der Prägewerkzeuge der Schwindungsfehler auf das jeweils gewünschte Maß verringert werden kann. Andererseits kann die Folienbreite vergrößert werden, ohne daß der Schwindungsfehler zunimmt.

Gemäß einer weiteren Ausführungsform sind die Prägewerkzeuge mit Kühleinrichtungen versehen.

Der Dehnungsstreifen kann erfindungsgemäß auch dadurch ausgebildet werden, daß die Transportkette oder die Transportketten im Mittelbereich der Folie derart angeordnet sind, daß sie bei geschlossenem Formwerkzeug nach oben über die Folienebene hinausragen. Dadurch wird die Folie im Bereich dieser mittleren Transportketten nach oben gedrückt, so daß sich ein nach oben gewölbter Buckel ausbildet. Während des Formvorgangs wird die Folienbahn im Bereich der Formwerkzeuge, d.h. im Bereich der Becher- oder Formkörperformung abgekühlt, während im Bereich des Buckels die Folie noch relativ warm und damit äußerst elastisch ist. Nach dem Öffnen des Formwerkzeugs tritt die oben beschriebene Schwindung auf. Dadurch, daß die Folienbahn in ihren Randbereichen von den dortigen Transportketten noch gehalten wird, wird der Buckel gedehnt und somit der Schwindungsfehler zumindest teilweise kompensiert. Zu diesem Zweck endet die mittlere Transportkette(n) hinter der Formstation, während die äußeren Transportketten hinter der Formstation weitergeführt werden. Die Länge der äußeren Transportketten hinter der Formstation entspricht etwa einer Vorschublänge.

Ober- und Unterteil des Fromwerkzeugs weisen einsprechende Ausnehmungen auf, so daß ein entsprechender Freiraum für die mittleren Transportketten und die Buckelausbildung zur Verfügung steht. Das Ober- und Unterteil des Formwerkzeugs kann auch mehrteilig ausgeführt sein, wobei zwischen den Einzelteilen entsprechende Freiräume für die Transportketten zur Verfügung stehen.

Das erfindungsgemäße Verfahren zum Herstellen von diesen dünnwandigen Formkörpern aus thermoplastischem Material ist dadurch gekennzeichnet, daß die Folie von der Transporteinrichtung in mindestens drei beabstandeten Bereichen erfaßt und während des Thermoformens geführt wird. Dadurch wird, wie oben bereits beschrieben wurde, das Durchhängen der Folie im Bereich des Formwerkzeuges auf ein erträgliches Maß reduziert, wodurch gleichzeitig die Betriebssicherheit verbessert wird.

Vorzugsweise wird die Folie auch bereits vor der Thermoverformung nur in den Bereichen geführt, an denen nachher die Transporteinrichtung angreift. Dies wird dadurch erreicht, daß die Walzen des Folienspeichers mit entsprechend angeordneten Auflagescheiben für die Folie versehen sind.

Vorzugsweise sind in der Folienmitte mindestens ein sich in Transportrichtung erstreckender Dehnungsstreifen ausgebildet. Je nach Breite der Folienbahn kann das ein Dehnungsstreifen oder auch mehrere sein. Um durch die Ausbildung der Dehnungsstreifen keinen zusätzlichen Materialverlust zu erzeugen, werden diese dort ausgebildet wo die Folienbahn von den weiteren Transportketten durch die Thermoformstation geführt wird.

Der Dehnungsstreifen kann dadurch hergestellt werden, daß ein Buckel im Bereich der Formstation eingeformt wird, oder aber daß nach dem Verformen und vor dem Ausstanzen die Folie geprägt wird. Vor dem Ausstanzen wird die Folie gedehnt, so daß die auftretenden Schwindungsfehler verringert werden.

Die Dicke der mit der Inline-Thermoformmaschine verarbeitbaren Folie beträgt vorzugsweise 0,5 bis 3,5

EP 0 363 650 B1

mm.

Bei Folien aus Polystyrol beträgt die Temperatur vor dem Formwerkzeug 120 bis 140°C und hinter dem Formwerkzeug weniger als 90°C.

Bei Folien aus Polypropylen betragen die entsprechenden Temperaturen 130 bis 160°C bzw. weniger als 100°C.

Die Temperatur auf den Scheiben liegt ca 10°C niedriger als die Temperatur im Formfeld vor dem Formwerkzeug.

Durch das Prägewerkzeug erfolgt eine Abkühlung auf weniger als 90°C bei Polystyrol-Folie und weniger als 100°C bei Polypropylen-Folie.

Beispielhafte Ausführungsformen werden nachfolgend anhand der Figuren näher erläutert.

Es zeigen:

Figur 1 eine schematische Ansicht der erfindungsgemäßen Inline-Thermoformmaschine;

Figur 2a eine Draufsicht auf den unteren Teil der Formstation;

Figur 2b einen Schnitt durch den unteren Teil der Formstation längs der Linie I-I;

Figur 2c einen Schnitt durch die Formstation bei geschlossenem Formwerkzeug;

Figur 2d einen Schnitt durch die Folie nach Verlassen der Formstation;

Figur 3 eine Seitenansicht des Folienspeichers;

Figur 4a und 4b die Ansichten zweier Tänzerwalzen mit und ohne Scheiben;

Figur 4c Seitenansicht einer Scheibe;

Figur 5 eine schematische Darstellung der Prägestation;

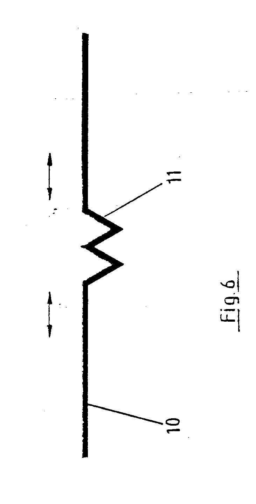

Figur 6 Schnitt durch eine geprägte Folie.

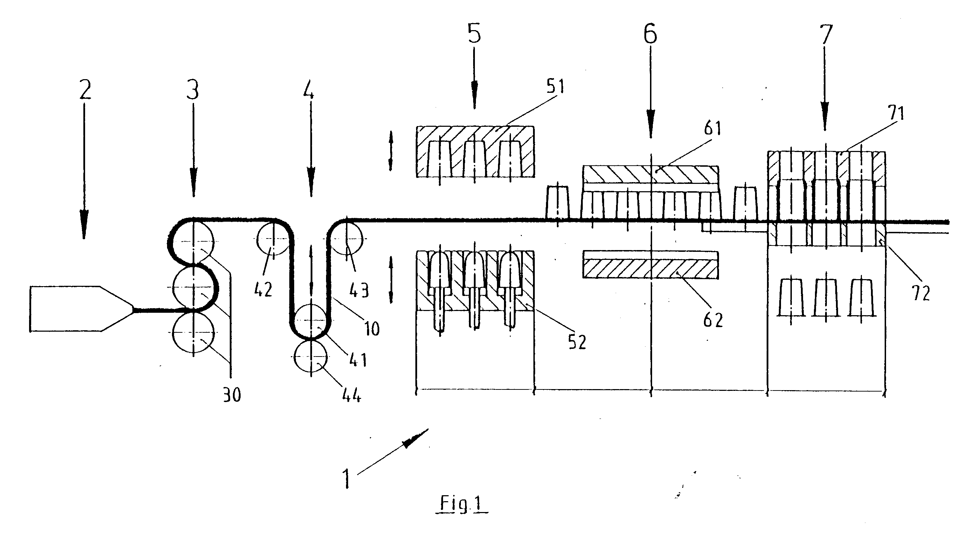

Die Figur 1 zeigt in schematischer Darstellung eine Inline-Thermoformmaschine 1. Aus dem mit einer Breitschlitzdüse versehenen Extruder 2 tritt eine Folie 10 aus, die zunächst in der Kühlstation 3 durch mehrmaliges Überlaufen der Walzen 30 gekühlt wird. Anschließend gelangt die Folie 10 in den Folienspeicher 4, der in der hier gezeigten Ausführungsform aus zwei Umlenkwalzen 42 und 43, einer Tänzerwalze 41 und einer entsprechenden Gegenwalze 44 besteht. Während das Formwerkzeug, das aus den beiden Formwerkzeugteilen 51 und 52 besteht, geschlossen ist, müßte der Vorschub der Folie für die Zeit des Formvorgangs angehalten werden. Um einen kontinuierlichen Betrieb zu gewährleisten, führt deshalb die Tänzerwalze 41 während des Formvorgangs eine vertikale Bewegung um den Hub V/2 nach unten aus, der der Hälfte des Folienvorschubes und der Werkzeuglänge der Formwerkzeuges 51, 52 entspricht. Auf diese Weise wird die Folie 10 kurzzeitig gespeichert. Während des Speichervorgangs ist die Walze 43 in Ruhe und die Walze 41 dreht sich mit der halben Geschwindigkeit der Walze 42. Nach dem Öffnen der Formwerkzeuge 51, 52 in der Formstation 5 wird die Folie 10 um die Formwerkzeuglänge weiter transportiert, wobei die Trägerwalze 41 um den entsprechenden Hub nach oben fährt.

Nach dem Verlassen der Formstation 5 gelangt die Folie 10 mit den Formkörpern zur Ausbildung des Dehnungsstreifens in die Prägestation 6, die aus den Prägewerkzeugteilen 61 und 62 besteht. Daran schließt sich die Stanzstation 7 mit den Stanzwerkzeugen 71 und 72 an.

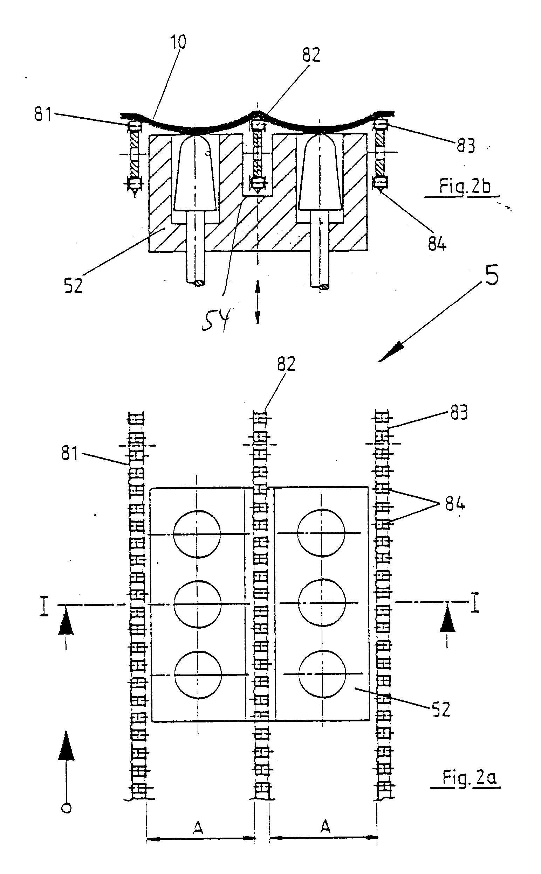

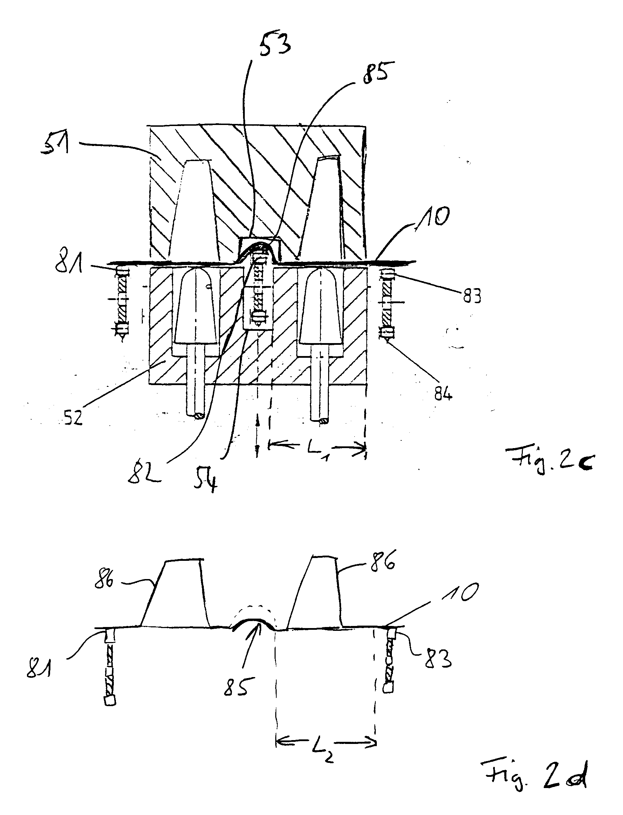

In der Figur 2a ist die Draufsicht auf das Formwerkzeugunterteil 52 dargestellt. An den beiden äußeren Rändern sind die bereits bekannten Transportketten 81 und 83 angeordnet, die mit Spitzen 84 versehen sind. Zusätzlich ist in der Mitte eine weitere Transportkette 82 vorgesehen, die ebenfalls mit Spitzen versehen ist. Auf diese Weise wird, wie in der Figur 2b zu sehen ist, ein zu starkes Durchhängen der Folie 10 verhindert. Das Unterteil 52 des Formwerkzeuges weist in der Mitte eine entsprechende Ausnehmung 54 für diese zusätzliche Transportkette 82 auf. Der Pfeil in der Figur 2b gibt die Bewegungsrichtung des Formwerkzeugteils 52 an. In dem in den Figuren 2a und 2b gezeigten Beispiel entspricht der Abstand A der Transportketten etwa der halben Folienbreite.

Auf die in Figur 1 gezeigte Prägestation kann verzichtet werden, wenn der Dehnungsstreifen in der Formstation gebildet wird. Zur Ausbildung des Dehnungsstreifens in Form eines Buckels 85 ist die mittlere Transportkette 82 in der Figur 2c derart angeordnet, daß sie bei geschlossenem Formwerkzeug 51, 52 über die Folienebene nach oben vorsteht und in die Ausnehmung 53 des Formwerkzeugoberteils 51 hineinragt. Die Folie 10 wird dadurch nach oben gewölbt, so daß sich der Buckel 85 ausbildet. In dieser Ausführungsform ist die Transportkette 82 gegenüber den Ketten 81 und 83 nach oben versetzt angeordnet. Es besteht aber noch die Möglichkeit, wie in der Figur 2b zu sehen ist, alle Transportketten 81, 82, 83 auf gleicher Höhe anzuordnen.

Nach dem Öffnen des Formwerkzeugs 51, 52 tritt eine Schwindung auf, so daß die Länge L1 sich um die Schwindung verringert und die Länge L2 (s. Figur 2d) ergibt. Da die Folie 10 im Randbereich noch auf den Ketten 81 und 83 fixiert ist, wird der Buckel senkrecht zur Transportrichtung gestreckt und damit der Schwindungsfehler nahezu kompensiert. Die mittlere Transportkette 82 endet hinter der Formstation und ist daher in Fig. 2d nicht dargestellt. Der verbleibende Schwindungsfehler wird dadurch ausgeglichen, daß das Stanzwerkzeug die Formkörper 86 in ihre Sollposition drückt.

5

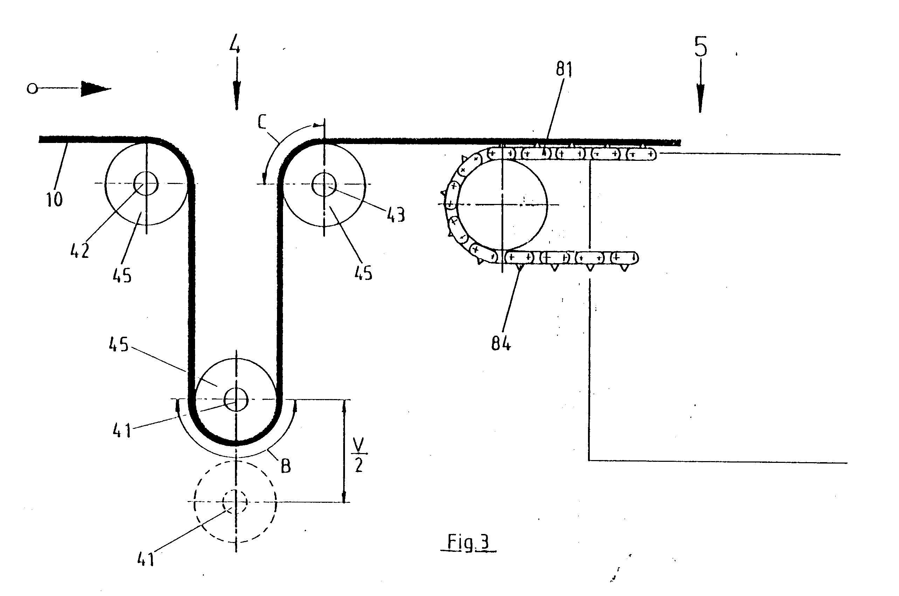

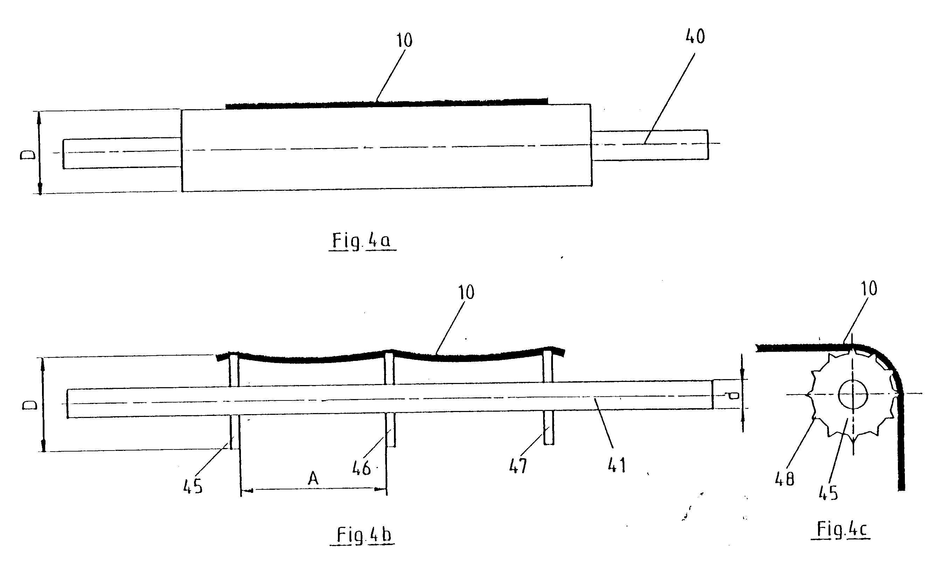

Die Figur 3 zeigt in schematischer Darstellung den Folienspeicher 4 mit anschließender Formstation 5. Während das Formwerkzeug in der Formstation 5 geschlossen ist, bewegt sich die Tänzerwalze 41 von der oberen Position um die Strecke V/2 in die untere Position (gestrichelt dargestellt). Während dieses Vorgangs steht die Folie auf der Umlenkwalze 43. Der Auflagebereich, in dem bei den bisher benutzten kompakten Walzen eine deutliche Abkühlung erfolgte, ist durch C gekennzeichnet. Aber auch im Bereich B der Tänzerwalze 41 erfolgt bei den bisher verwendeten kompakten Tänzerwalzen eine geringe Abkühlung, da diese Walze mit einer anderen Umfangsgeschwindigkeit läuft als die Umlenkwalze 42. Dieses Problem der Abkühlung wird dadurch gelöst, daß die Umlenkwalzen 42 und 43 sowie die Tänzerwalze 41 mit drei Scheiben 45, 46, und 47 versehen werden, auf deren Außenumfang die Folie 10 aufliegt. Dies ist in der Figur 4b dargestellt. Der Durchmesser D wird vorzugsweise so groß wie bei den bisherigen kompakten Walzen gewählt, die in Figur 4a dargestellt ist. Der Abstand der Scheiben und der Durchmesser D der Walze 41 wird je nach Art des Materials so gewählt, daß die durchhängende Folie 10 die Walze selbst nicht berührt. Die Anordnung und der Abstand A der Scheiben 45, 46 und 47 werden so gewählt, daß ihre Position mit der Anordnung der Transportketten 81, 82 und 83 übereinstimmt. Dies hat den Vorteil, daß die durch die Scheiben 45, 46 und 47 bewirkte Abkühlung der Folie in den beiden Randbereichen sowie im Mittelbereich keine nachteiligen Auswirkungen hat. Diese Bereiche werden nämlich bei der entsprechenden Abstimmung und Anordnung der Scheiben 45, 46 und 47 von den nachfolgenden Transportketten 81, 82 und 83 erfaßt, die die Folie 10 durch das Formwerkzeug 51, 52 hindurch tragen. Die partielle Abkühlung der Folie insbesondere auf der mittleren Scheibe 16 ist somit ohne Schaden für die zu verformende Folie und bewirkt sogar durch die Stabilisierung der Folie einen besseren Transport durch die Formstation 5.

Der Abstand A zwischen den Scheiben 45, 46 und 47 kann zwischen 250 und 500 mm betragen. Je nach Folientemperatur ergeben sich für die Materialien Polystyrol und Polypropylen Durchhängungen von 5 bis 30 mm bei einem Abstand A von 250 mm und von 15 bis 50 mm bei einem Abstand A von 500 mm.

In der Figur 4c ist eine Seitenansicht einer derartigen Scheibe 45 dargestellt. Welche Profilierung die Scheibe vorzugsweise aufweist, richtet sich nach dem Schlupf des Folienmaterials. In der hier gezeigten Darstellung ist die Scheibe 45 mit Spitzen 48 versehen.

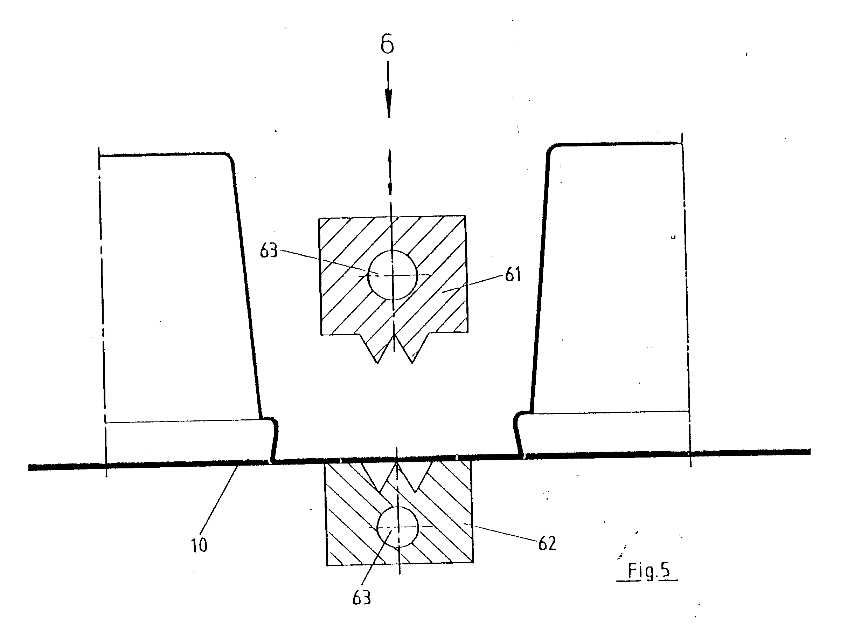

In der Figur 5 ist ein Querschnitt durch die Prägestation 6 und die Folie 10 gezeigt. Das Prägewerkzeug besteht aus den beiden Teilen 61 und 62. Das Prägewerkzeug ist so ausgestaltet, daß in die Folie 10 ein Dehnungsstreifen in Gestalt eines W eingeprägt wird. In Transportrichtung besitzen die Prägewerkzeugteile 61 und 62 mindestens die gleiche Länge wie die Formstation 5 und die darin vorgesehenen Formwerkzeuge 51, 52.

Anstelle der Einprägung eines W kann auch jede andere Gestalt als Dehnungsstreifen eingeprägt werden, solange die damit verbundene Materialdehnbarkeit die bei dem jeweiligen verwendeten Material auftretende Schrumpfung kompensiert. Damit dieser geprägte Materialstreifen, der dem Frischmaterial nachfolgend wieder zugeführt wird, auf eine ausreichend niedrige Temperatur abgekühlt ist, damit er von der Zerkleinerungsvorrichtung verarbeitet werden kann, sind die Prägewerkzeuge 61 und 62 mit Kühleinrichtungen versehen, die im vorliegenden Beispiel durch die Kühlbohrung 63 angedeutet sind. Diese Bohrungen können mit Kühlwasser durchspült werden.

Bezugszeichenliste

1 Inline-Thermoformmaschine
2 Extruder
3 Kühlstation
4 Folienspeicher
5 Thermoformstation
6 Prägestation
7 Stanzstation
8 Transporteinrichtung
10 Folie
11 Prägestelle
30 Walze
41 Tänzerwalze
42 Umlenkwalze
43 Umlenkwalze
44 Walze
45 Scheibe
46 Scheibe
47 Scheibe

48 Spitze

51 Oberteil

52 Unterteil des Formwerkzeugs

53 Ausnehmung

54 Ausnehmung

61 Oberteil

62 Unterteil des Prägewerkzeugs

63 Bohrung für Wasserkühlung

71 Oberteil

72 Unterteil der Stanzvorrichtung

81 Kette

82 Kette

83 Kette

84 Spitze

85 Buckel

86 geformte Becher

V/2 Bewegungsstrecke der Tänzerwalze 41 (halbe Vorschubstrecke der Folie 10)

A Breite zwischen den Ketten 81, 82, 83

B Auflage der Folie 10 auf den Scheiben 45, 46, 47 der Tänzerwalze 41

C Auflage der Folie 10 auf den Scheiben 45, 46, 47 der Umlenkwalze 43

D Durchmesser der Scheiben 45, 46, 47

**Patentansprüche**

1. Inline-Thermoformmaschine ohne Folienheizung, mit Extruder, Kühlstrecke, Folienspeicher mit mindestens zwei Umlenkwalzen und einer Tänzerwalze, und mit einer Formstation und einer Stanzstation sowie mit einer Einrichtung zum Transport der Folie durch die Form- und die Stanzstation, wobei die Transporteinrichtung am Folienrand angeordnete Transportketten aufweist, dadurch gekennzeichnet, daß die Umlenkwalzen (42, 43) und die Tänzerwalze (41) mit mindestens drei im Abstand angeordneten runden Scheiben (45, 46, 47) versehen sind, auf deren Außenumfang die Folie (10) aufliegt und im Bereich der Formstation (5) zwischen den beiden äußeren Transportketten (81, 83) mindestens eine weitere Transportkette (82) angeordnet ist.

2. Thermoformmaschine nach Anspruch 1, dadurch gekennzeichnet, daß diese zusätzliche Transportkette (82) eine Spitzenkette ist.

3. Thermoformmaschine nach Anspruch 1 oder 2, dadurch gekennzeichnet, daß der Abstand der Transportketten A derart gewählt ist, daß die Folie aufgrund des Durchhängens nicht das untere Werkzeug (52) der Formstation (5) berührt.

4. Thermoformmaschine nach einem der Ansprüche 1 bis 3, dadurch gekennzeichnet, daß die Scheiben ( 45, 46, 47) im gleichen Abstand A wie die nachfolgenden Transportketten (81, 82, 83) angeordnet sind und in Transportrichtung diesen Transportketten (81, 82, 83) gegenüberliegen.

5. Thermoformmaschine nach einem der Ansprüche 1 bis 4, dadurch gekennzeichnet, daß der Durchmesser D der Scheiben (45, 46, 47) je nach Art des verwendeten Folienmaterials derart bemessen ist, daß die Folie (10) die Walzen (41, 42, 43) nicht berührt.

6. Thermoformmaschine nach einem der Ansprüche 1 bis 5, dadurch gekennzeichnet, daß die Scheiben (45, 46, 47) am Außenumfang profiliert sind.

7. Thermoformmaschine nach einem der Ansprüche 1 bis 6, dadurch gekennzeichnet, daß zwischen der Formstation (5) und der Stanzstation (7) eine Prägestation (6) vorgesehen ist.

8. Thermoformmaschine nach Anspruch 7, dadurch gekennzeichnet, daß die Prägestation (6) mindestens ein zweiteiliges Prägewerkzeug (61, 62) aufweist, das in Transportrichtung hinter der zusätzlichen Transportkette (82) der Formstation (5) angeordnet ist und mindestens der Länge des Formwerkzeugs (51, 52) entspricht.

9. Thermoformmaschine nach einem der Ansprüche 7 oder 8, dadurch gekennzeichnet, daß diese Prägewerkzeuge (61, 62) mit einer Kühleinrichtung (63) versehen sind.

10. Thermoformmaschine nach einem der Ansprüche 1 bis 6, dadurch gekennzeichnet, daß die weitere Transportkette (82) in der Formstation (5) derart angeordnet ist, daß sie bei geschlossenem Formwerkzeug (51, 52) über die Folienebene nach oben vorsteht, so daß die Folie (10) in diesem Bereich einen nach oben gewölbten Buckel (85) bildet.

11. Thermoformmaschine nach Anspruch 10, dadurch gekennzeichnet, daß das Oberteil (51) und das Unterteil (52) des Formwerkzeugs jeweils eine Ausnehmung (53, 54) zum Hindurchführen der weiteren Transportkette (82) aufweisen.

12. Verfahren zum Herstellen von dünnwandigen Formkörpern aus thermoplastischem Material, in welchem das thermoplastische Material in einem Extruder bis zur Fließfähigkeit verdichtet und erhitzt und in Form eines plastischen Bandes oder Folie aus einer schlitzförmigen Düse gegossen wird, diese Folie einer Thermoverformung zur Bildung der gewünschten Formkörper unterworfen wird und die so in der Folie gebildeten Formkörper ausgestanzt und abtransportiert werden, dadurch gekennzeichnet, daß die Folie von der Transporteinrichtung in mindestens drei beabstandeten Bereichen während des Thermoverformens geführt wird.

13. Verfahren nach Anspruch 12, dadurch gekennzeichnet, daß die Folie auch vor der Thermoverformung nur in den Bereichen geführt wird, an denen nachher die Transporteinrichtung angreift.

14. Verfahren nach Anspruch 12 oder 13, dadurch gekennzeichnet, daß in der Folienmitte mindestens ein sich in Transportrichtung erstreckender Dehnungsstreifen ausgebildet wird, der vor dem Ausstanzen senkrecht zur Transportrichtung gestreckt wird, um Schwindungsfehler zu zu kompensieren.

15. Verfahren nach Anspruch 14, dadurch gekennzeichnet, daß die Folie nach dem Verformen und vor dem Ausstanzen zumindest in einem Bereich, in dem die Folie geführt worden ist, zur Ausbildung des Dehnungsstreifens geprägt wird.

16. Verfahren nach Anspruch 14, dadurch gekennzeichnet, daß die Folie während des Thermoverformens zumindest in einem Bereich in dem die Folie geführt wird, zur Ausbildung des Dehnungsstreifens ein Buckel eingeformt wird und daß nach dem Thermoverformen die Folie im Bereich des Buckels unter Verringerung der Buckelhöhe gestreckt wird.

## Claims

1. In-line thermoforming machine without foil heating comprising an extruder, a cooling stretch, a foil storage with at least two deflection rollers and a compensating roller, said thermoforming machine further comprising a forming station and a punching station as well as a device for conveying the foil through the forming and punching station, the conveyance device having conveyor chains arranged at the foil rim, characterized in that
the deflection rollers (42, 43) and the compensation roller (41) are provided with at least three round discs spaced one from another (45, 46, 47), on the circumference of which the foil is positioned and in that in the section of the forming station (5), between the two outward conveyor chains (81, 83), at least one additional conveyor chain (82) is arranged.

2. Thermoforming machine according to claim 1, characterized in that the said additional conveyor chain (82) is a peak chain.

3. Thermoforming machine according to claims 1 or 2, characterized in that the distance of the conveyor chains A is chosen thus that, because of the sagging effect, the foil doesn't contact the lower tool (52) of the forming station (5).

4. Thermoforming machine according to one of claims 1 to 3, characterized in that the discs (45, 46, 47) are arranged with equidistance A one from another like the succeeding conveyor chains (81, 82, 83) and that the said discs are opposite to the said conveyor chains (81, 82, 83), as regards the direction of conveyance.

5. Thermoforming machine according to one of claims 1 to 4, characterized in that, depending from the nature of the foil material used, the diameter D of the discs (45, 46, 47) is adjusted thus that the foil (10) does not contact the rollers (41, 42, 43).

6. Thermoforming machine according to one of claims 1 to 5 characterized in that the discs (45, 46, 47) are profiled at their circumference.

7. Thermoforming machine according to one of claims 1 to 6, characterized in that a stamping station (6) is provided between the forming station (5) and the punching station (7).

8. Thermoforming machine according to claim 7, characterized in that the stamping station (6) has at least a two-part stamping tool (61, 62) being arranged behind the additional conveyor chain (82) of the forming station (5) as regards the direction of conveyance and corresponding to at least the length of the forming tool (51, 52).

9. Thermoforming machine according to one of claims 7 or 8, characterized in that the said stamping tool (61, 62) is provided with a cooling device (63).

10. Thermoforming machine according to one of claims 1 to 6, characterized in that the additional conveyor chain (82) in the forming station (5) is arranged thus that, the forming tool (51, 52) being shut, it projects upwards over the foil plane thus that the foil (10) in the said section forms a bulge (85) bent upwards.

11. Thermoforming machine according to claim 10, characterized in that, in each case, the upper part (51) and the lower part (52) of the forming tool are provided with a recess (53, 54), to lead the succeeding conveyor chain (82) through it.

12. A process for the manufacture of thinwalled shaped bodies of thermoplastic material, wherein the thermoplastic material is compressed and heated in an extruder until flowability and cast from a slot-shaped nozzle in the form of a plastic band or foil, the said foil being subjected to a thermoforming process to form the desired shaped body and the said bodies thus formed in the foil being punched and conveyed, characterized in that, in the course of thermoforming, the foil is guided by the conveyance device at least at three spaced regions.

13. A process according to claim 12, characterized in that, prior to the thermoforming process, the foil is only guided at those regions where afterwards the conveyance device is engaged.

14. A process according to claims 12 or 13, characterized in that, in the middle of the foil, a stretching strip extending in the direction of conveyance is formed which, prior to punching, is stretched perpendicular to the direction of conveyance in order to compensate contraction imperfections.

15. A process according to claim 14, characterized in that after the shaping and prior to the punching process, in order to develop the stretching strip, the foil is stamped at least in a region where the foil has been guided.

16. A process according to claim 14, characterized in that, in the course of a thermoforming process, in order to develop the stretching strip, a bulge is imparted to the foil at least in a region where the foil is guided, and in that, after the thermoforming process, in the region of the bulge, the foil is stretched by reducing the height of the bulge.

## Revendications

1. Machine de thermoformage en ligne sans chauffage de feuille, comportant une extrudeuse, un parcours de refroidissement, un stockeur de feuille avec au moins deux rouleaux de renvoi et un rouleau danseur, et comportant un poste de formage et un poste de découpage ainsi qu'un dispositif pour le transport de la feuille à travers le poste de formage et le poste de découpage, le dispositif de transport comportant des chaînes de transport disposées sur le bord de la feuille, caractérisée en ce que les rouleaux de renvoi (42, 43) et le rouleau danseur (41) sont pourvus d'au moins trois disques (45, 46, 47) ronds, espacés, sur le pourtour extérieur desquels repose la feuille (10) et au moins une autre chaîne de transport (82) étant placée dans la zone du poste de formage (5), entre les deux chaînes de transport (81, 83) extérieures.

2. Machine de thermoformage selon la revendication 1, caractérisée en ce que cette chaîne de transport (82) supplémentaire est une chaîne à picots.

3. Machine de thermoformage selon la revendication 1 ou 2, caractérisée en ce que l'espacement des chaînes de transport (A) est tel que la feuille ne touche pas l'outil inférieur (52) du poste de formage (5), en s'affaissant.

4. Machine de thermoformage selon l'une des revendications 1 à 3, caractérisée en ce que les disques (45, 46, 47) sont disposés suivant un même espacement (A) que les chaînes de transport (81, 82, 83) suivantes et font face, dans le sens du transport, à ces chaînes de transport (81, 82, 83).

5. Machine de thermoformage selon l'une des revendications 1 à 4, caractérisée en ce que le diamètre (D) des disques (45, 46, 47) a une valeur telle que, suivant le type de la matière des feuilles utilisées, la feuille (10) ne touche pas les rouleaux (41, 42, 43).

6. Machine de thermoformage selon l'une des revendications 1 à 5, caractérisée en ce que les disques (45, 46, 47) sont profilés sur leur pourtour extérieur.

7. Machine de thermoformage selon l'une des revendications 1 à 6, caractérisée en ce qu'il est prévu un poste de marquage (6) entre les postes de formage (5) et de découpage (7).

8. Machine de thermoformage selon la revendication 7, caractérisée en ce que le poste de marquage (6) comporte au moins un outil de marquage (61, 62) en deux parties, qui est monté, dans le sens du transport, derrière la chaîne de transport (82) supplémentaire du poste de formage (5) et qui correspond au moins à la longueur de l'outil de formage (51, 52).

9. Machine de thermoformage selon l'une des revendications 7 ou 8, caractérisée en ce que ces outils de marquage (61, 62) sont pourvus d'un dispositif de refroidissement (63).

10. Machine de thermoformage selon l'une des revendications 1 à 6, caractérisée en ce que l'autre chaîne de transport (82) est montée dans le poste de formage (5) de manière que, lorsque l'outil de formage (51, 52) est fermé, elle dépasse vers le haut du plan de la feuille, de manière que la feuille (10) forme un bossage (85) courbé vers le haut.

11. Machine de thermoformage selon la revendication 10, caractérisée en ce que la partie supérieure (51) et la partie inférieure (52) de l'outil de formage présentent chacune un évidement (53, 54), pour la traversée de l'autre chaîne de transport (82).

12. Procédé de fabrication de pièces moulées à paroi mince en matière thermoplastique, dans lequel la matière thermoplastique est comprimée et chauffée dans une extrudeuse, jusqu'à la rendre fluide et est coulée, sous la forme d'une bande plastique ou feuille, à partir d'une filière en forme de fente, cette feuille étant soumise à un thermoformage pour former la pièce moulée voulue et la pièce moulée ainsi formée dans la feuille, est découpée et évacuée, caractérisé en ce que la feuille est guidée par le dispositif de transport dans au moins trois zones espacées l'une de l'autre, pendant le thermoformage.

13. Procédé selon la revendication 12, caractérisé en ce qu'avant le thermoformage aussi, la feuille n'est guidée que dans les zones dans lesquelles intervient ensuite le dispositif de transport.

14. Procédé selon la revendication 12 ou 13, caractérisé en ce qu'il est formé au centre de la feuille, au moins une bande d'allongement, s'étendant dans la direction du transport, qui, avant le découpage, est étirée perpendiculairement à la direction du transport, afin de compenser des défauts de retrait.

15. Procédé selon la revendication 14, caractérisé en ce qu'après déformation et avant découpage, la feuille est marquée, au moins dans une zone dans laquelle la feuille a été guidée, pour former la bande d'allongement.

16. Procédé selon la revendication 14, caractérisé en ce qu'il est formé un bossage dans la feuille, pendant le thermoformage, au moins dans une zone dans laquelle la feuille est guidée, pour former la bande d'allongement et en ce qu'après le thermoformage, la feuille est étirée dans la zone du bossage, pour réduire la hauteur de celui-ci.

Fig.1

Fig.2b

Fig.2a

Fig. 2c

Fig. 2d

Fig.3

EP 0 363 650 B1

Fig.4a

Fig.4b

Fig.4c

Fig.5

EP 0 363 650 B1

Fig. 6